(19) **Europäisches Patentamt / European Patent Office / Office européen des brevets**

(11) **EP 4 449 382 B1**

(12) # EUROPEAN PATENT SPECIFICATION

(45) Date of publication and mention of the grant of the patent:
**27.05.2026  Bulletin 2026/22**

(21) Application number: **22834635.9**

(22) Date of filing: **13.12.2022**

(51) International Patent Classification (IPC):
**G06V 40/70** (2022.01)     **G06V 10/82** (2022.01)
**G06V 40/16** (2022.01)

(52) Cooperative Patent Classification (CPC):
**G06V 40/70; G06V 10/82; G06V 40/172**

(86) International application number:
**PCT/EP2022/085482**

(87) International publication number:
**WO 2023/110790 (22.06.2023 Gazette 2023/25)**

(54) **CROSS-SPECTRAL FACE RECOGNITION TRAINING AND CROSS-SPECTRAL FACE RECOGNITION METHOD**

KREUZSPEKTRALES GESICHTSERKENNUNGSTRAINING UND KREUZSPEKTRALES GESICHTSERKENNUNGSVERFAHREN

FORMATION À LA RECONNAISSANCE FACIALE INTERSPECTRALE ET PROCÉDÉ DE RECONNAISSANCE FACIALE INTERSPECTRALE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.12.2021  EP 21306772**

(43) Date of publication of application:
**23.10.2024  Bulletin 2024/43**

(73) Proprietors:
- **THALES DIS FRANCE SAS**
  **92190 Meudon (FR)**
- **THALES**
  **92190 Meudon (FR)**
- **Board Of Trustees Of Michigan State University**
  **East Lansing, Michigan 48824 (US)**
- **INRIA - Institut National de Recherche en Informatique et en Automatique**
  **78150 Le Chesnay (FR)**

(72) Inventors:
- **ANGHELONE, David**
  **74300 CLUSES (FR)**
- **FAURE, Philippe**
  **92190 MEUDON (FR)**
- **CHEN, Cunjian**
  **LANSING, Michigan 48824 (US)**
- **ROSS, Arun**
  **LANSING, Michigan 48824 (US)**
- **DANTCHEVA, Antitza**
  **06902 SOPHIA ANTIPOLIS CEDEX (FR)**

(74) Representative: **Lotaut, Yacine Diaw**
**Thales Dis France SAS**
**Intellectual Property Department**
**6, rue de la Verrerie**
**92190 Meudon (FR)**

(56) References cited:
- **WU HAOXUE ET AL: "Exemplar Guided Cross-Spectral Face Hallucination via Mutual Information Disentanglement", 2020 25TH INTERNATIONAL CONFERENCE ON PATTERN RECOGNITION (ICPR), IEEE, 10 January 2021 (2021-01-10), pages 4206 - 4212, XP033909438, DOI: 10.1109/ICPR48806.2021.9412141**
- **DAVID ANGHELONE ET AL: "Beyond the Visible: A Survey on Cross-spectral Face Recognition", ARXIV.ORG, CORNELL UNIVERSITY LIBRARY, 201 OLIN LIBRARY CORNELL UNIVERSITY ITHACA, NY 14853, 12 January 2022 (2022-01-12), XP091138229**

EP 4 449 382 B1

**(Cont. next page)**

- **ANGHELONE DAVID ET AL: "Explainable Thermal to Visible Face Recognition Using Latent-Guided Generative Adversarial Network", 2021 16TH IEEE INTERNATIONAL CONFERENCE ON AUTOMATIC FACE AND GESTURE RECOGNITION (FG 2021), IEEE, 15 December 2021 (2021-12-15), pages 1 - 8, XP034000393, DOI: 10.1109/FG52635.2021.9667018**

- **CAO ZHICHENG ET AL: "A Bidirectional Conversion Network for Cross-Spectral Face Recognition", 3 May 2022 (2022-05-03), XP055923060, Retrieved from the Internet <URL:https://arxiv.org/ftp/arxiv/papers/2205/2205.01595.pdf> [retrieved on 20220519]**

**Description**

TECHNICAL FIELD

The present invention relates to a cross-spectral face recognition training method as well as a cross-spectral face recognition method based on a trained image set.

PRIOR ART

A cross-spectral face recognition method is disclosed in Zhang et al. "Tv-gan: Generative adversarial network based thermal to visible face recognition", in International Conference on Biometrics, pages 174-181, 2018. Another method is disclosed in Wu et al. "Exemplar Guided Cross-Spectral Face Hallucination via Mutual Information Disentanglement," 2020 25th International Conference on Pattern Recognition (ICPR), IEEE, 10 January 2021, pp. 4206-4212, DOI: 10.1109/ICPR48806.2021.9412141.

Other publications are Chen et al. "Matching thermal to visible face images using a semantic-guided generative adversarial network" in IEEE International Conference on Automatic Face & Gesture Recognition, pages 1-8, 2019, Di et al. "Multi-scale thermal to visible face verification via attribute guided synthesis" in IEEE Transactions on Biometrics, Behavior, and Identity Science, 3(2):266-280, 2021, Wang et al. "Thermal to visible facial image translation using generative adversarial networks" in IEEE Signal Processing Letters, 25(8):1161-1165, 2018, Iranmanesh et al. "Coupled generative adversarial network for heterogeneous face recognition" in Image and Vision Computing, 94:103861, 2020, Kezebou et al. "TR-GAN:thermal to RGB face synthesis with generative adversarial network for crossmodal face recognition" in Mobile Multimedia/Image Processing, Security, and Applications, volume 11399, pages 158-168, 2020, Di et al. "Polarimetric thermal to visible face verification via self-attention guided synthesis" in International Conference on Biometrics, pages 1-8, 2019.

Cross-spectral face recognition is more challenging than traditional FR for both human examiners as well as computer vision algorithms, due to following three limitations. Firstly, there can be large intra-spectral variation, where within the same spectrum, face samples of the same subject may exhibit larger variations in appearance than face samples of different subjects. Secondly, the appearance variation between two face samples of the same subject in different spectral bands can be larger than that of two samples belonging to two different subjects, referred to as modality gap. Finally, limited availability of training samples of cross-modality face image pairs can significantly impede learning-based schemes, including those based on deep learning models. Thermal sensors have been widely deployed in nighttime and low-light environments for security and surveillance applications. Some of them capture face images beyond the visible spectrum. However, there is considerable performance degradation when a direct matching is performed between thermal (THM) face images and visible (VIS) face images (due to the modality gap). This is mainly due to the change in identity determining features across the thermal and visible domains.

SUMMARY OF THE INVENTION

One of the main challenges in performing thermal-to-visible face recognition (FR) is preserving the identity across different spectral bands. In particular, there is considerable performance degradation when a direct matching is performed between thermal (THM) face images and visible (VIS) face images. This is mainly due to the change in identity determining features across the thermal and visible domains.

Based on the prior art it is an object of the invention to provide a CFR method overcoming the cited problems. This is achieved for a CFR training method with the features of claim 1. A cross-spectral recognition method within a visual image database is disclosed in claim 2. For completeness, a cross-spectral recognition method within a thermal image database is disclosed in claim 3.

The present invention is based on the insight that a supervised learning framework that addresses Cross-spectral Face Recognition (CFR), i.e: Thermal-to-Visible Face Recognition can be improved, if the encoded features are disentangled between style features solely related to the spectral domain of the image and identity features which are present in both spectral versions of the image.

The present invention minimizes the spectral difference by synthesizing realistic visible faces from their thermal counterparts. In particular, it translates facial images from one spectrum to another, while preserving explicitly the identity or in other words, it disentangle the identity from other confounding factors, and as a result the true appearance of the face is now preserved during the spectral translation. In this context an input image is explicitly decomposed into an identity code that is spectral-invariant and a style code that is spectral-dependent.

To enable thermal-to-visible translation and vice versa, the method according to the invention incorporates three networks per spectrum, (i) identity encoder, (ii) style encoder and (iii) decoder. To translate an image from a source spectrum to a target spectrum, the identity code is combined with a style code denoting the target domain. By using such disentanglement, the identity during the spectral translation is preserved as well as the identity preservation is analyzed by interpreting and visualizing the identity code.

As mentioned above the method proposes a supervised learning framework for CFR that translates facial images from one spectrum to another, while preserving the explicitly the identity. This is done with the concept of introducing a latent space with identity and style codes. X. Huang et al. have published in "Multimodal unsupervised image-to-image translation" in European Conference on Computer Vision, 2018 a method for the latent space decomposition in a context not similar to the issues raised in the connection with the problem of CFR.

Face recognition beyond the visible spectrum allows for increased robustness in the presence of different poses, illumination variations, noise, as well as occlusions. Further benefits include incorporating the absolute size of objects, as well as robustness to presentation attacks such as makeup and masks. Therefore, comparing RGB face images against those acquired beyond the visible spectrum is of particular pertinence in designing Face Recognition (FR) systems for defense, surveillance, and public safety and is referred to as Cross-spectral Face Recognition (CFR).

Four loss functions have been introduced in order to enhance both image as well as latent reconstructions.

The latent space has been analyzed and decomposed into a shared identity space and a spectrum dependent style space, by visualizing the encoding using heatmaps.

The method has been evaluated on two benchmark multispectral face datasets and achieve improved results with respect to visual quality, as well as face recognition matching scores.

Thus, one object of the invention is a cross-spectral face recognition training method using a visible light face image set comprising a number of visual images and an infrared face image set comprising a number of thermal images, both sets related to the identical group of persons, wherein each thermal image has a corresponding visual image of an identical person, characterized in that it includes:

a spectrally separated learning submethod trained in a supervised manner, said training being optimized and weights being updated by back-propagation trend, said spectrally separated learning submethod comprising the steps of:

decomposing each visual or thermal image of the visual or thermal image set into a visual or thermal identity code using identity labels and a visual or thermal identity encoder respectively and into a visual or thermal style code using style labels and a visual or thermal style encoder, respectively,

decoding the visual identity code together with the visual style code generating a recreated visual image, and decoding the thermal identity code together with the thermal style code generating a recreated thermal image,

wherein an identity loss function computed using identity labels as well as a recreated image loss function is connecting the recreated visual image and the recreated thermal image with the associated visible light face image and associated thermal image,

a first cross-spectral learning submethod for each of the visual target images comprising the steps of:

providing a noise source and combining it with the visual style code creating a noise modified visual style code based on a loss function providing a condition on the spectral distribution,

using this noise modified visual style code together with the thermal identity code as input for the visual decoder to create a simulated visual image,

coding a recreated visual style code and a recreated thermal identity code by coding the simulated visual image with the visual style encoder and the visual identity encoder, respectively,

wherein the recreated image loss function is applied on the recreated visual style code feeding back onto the noise modified visual style code as well as on the recreated thermal identity code feeding back on the thermal identity code,

wherein the simulated visual image is compared with a target visual image in a visual discriminator for match or non-match,

a second cross-spectral learning submethod for each of the thermal target images trained in a supervised manner simultaneously to the spectrally separated learning submethods said training being optimized and weights being updated by back-propagation trend, said second cross-spectral learning submethod comprising the steps of:

providing a noise source and combining it with the thermal style code creating a noise modified thermal style code based on a loss function providing a condition on the spectral distribution,

using this noise modified thermal code together with the visual identity code as input for the thermal decoder to create a simulated thermal image,

coding a recreated thermal style code and a recreated visual identity code by coding the simulated thermal image with the thermal style encoder and the thermal identity encoder, respectively,

wherein the recreated image loss function is applied on the recreated thermal style code feeding back onto the noise modified thermal style code as well as on the recreated visual identity code feeding back on the thermal identity code,

wherein the simulated thermal image is compared with a target thermal image in a thermal discriminator for match or non-match.

Further embodiments of the invention are laid down in the dependent claims.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1    shows an overview flowchart of the invention;
Fig. 2    shows the main components of the learning method according to the invention;
Fig. 3    shows a flowchart depicting the training of the method according to an embodiment of the invention;
Fig. 4    shows the auto-encoder architecture used as an entity and in separated parts in the method as will be described in connection with Fig. 3;
Fig. 5    shows three examples of visual and thermal images and the common identity features;
Fig. 6    shows the application of the method according to the invention in face recognition;
Fig. 7    shows a ROC curve pertaining to different loss functions for the ARL-MMFD dataset; and
Fig. 8    shows a ROC curve pertaining to different loss functions for the ARL-VTF dataset.

DESCRIPTION OF PREFERRED EMBODIMENTS

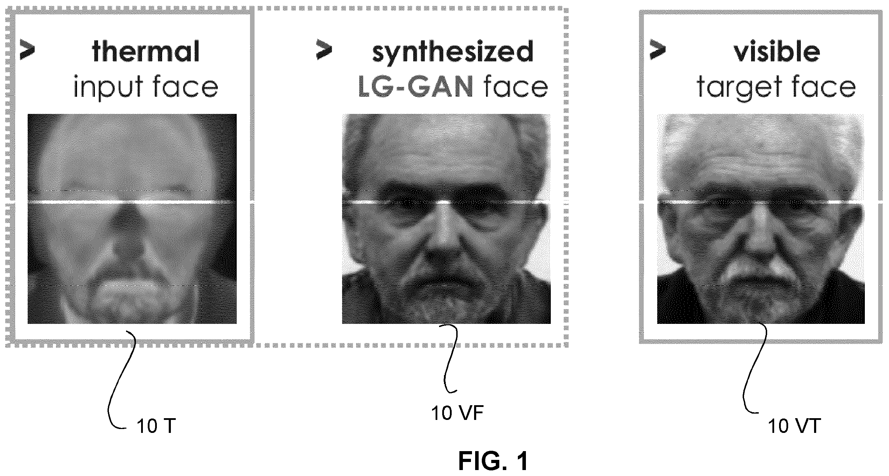

Fig. 1 shows an overview flowchart of the invention. A detected thermal image 10T is the input for the present CFR. An synthesized visual image 10VF is created and this image is looked for in the target database of visual images and the visual target face image 10VT is found in the target database.

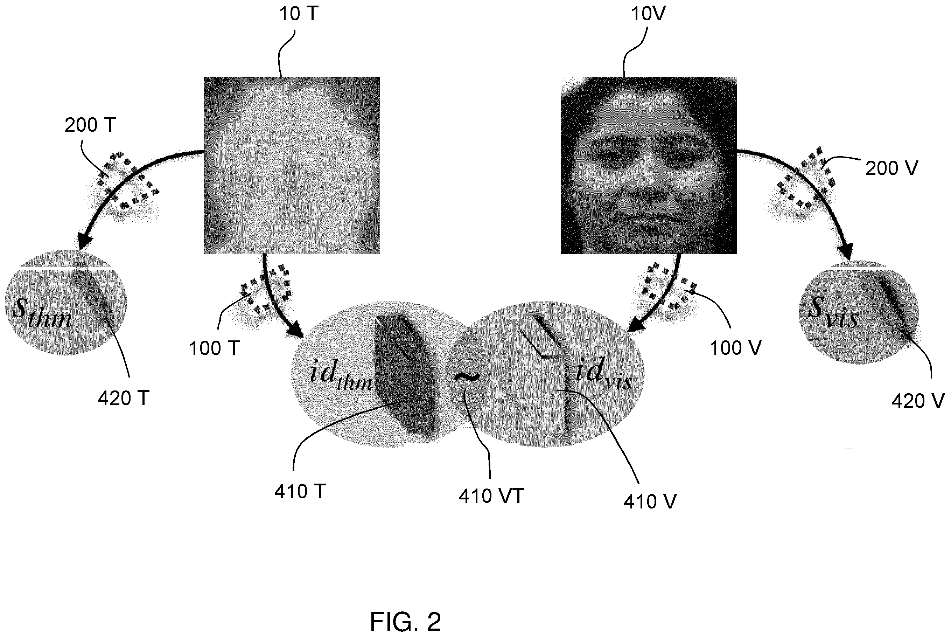

The following description in connection with Fig. 2 to 4 will explain the features relating to the generator for each domain which comprises of three networks, viz., Identity-Encoder, Style-Encoder and Decoder, targeted to extract a domain-shared identity latent code and a spectrum-specific style latent code. The translated image is reconstructed by combining the identity code with the style code of the target spectrum. As a result, Fig. 1 shows said synthetized visible image 10VF generated by the method.

Fig. 2 shows the main components of the learning method according to the invention. The learning method is based on a set of associated face images, a thermal image 10T and a visual image 10V, of the same person.

The thermal image 10T is coded in two different ways. A style encoder 200T provides a style code 420T of the thermal image 10T, also denoted $s_{thm}$. An identity encoder 100T provides an identity code 410T of the thermal image 10T, also denoted $id_{thm}$.

The visual image 10V is also coded in two different ways, based on the same principles. A style encoder 200V provides a style code 420V of the visual image 10V, also denoted $s_{vis}$. An identity encoder 100V provides an identity code 410V of the visual image 10V, also denoted $id_{vis}$.

The two face images of the same person share in identity features a common part in the respective identity codes 410T and 410V which is noted in Fig. 2 as common identity code 410VT, whereas the style codes 420T and 420V for the two images comprise features only relevant two the specific style, i.e. either thermal or visual, of the image.

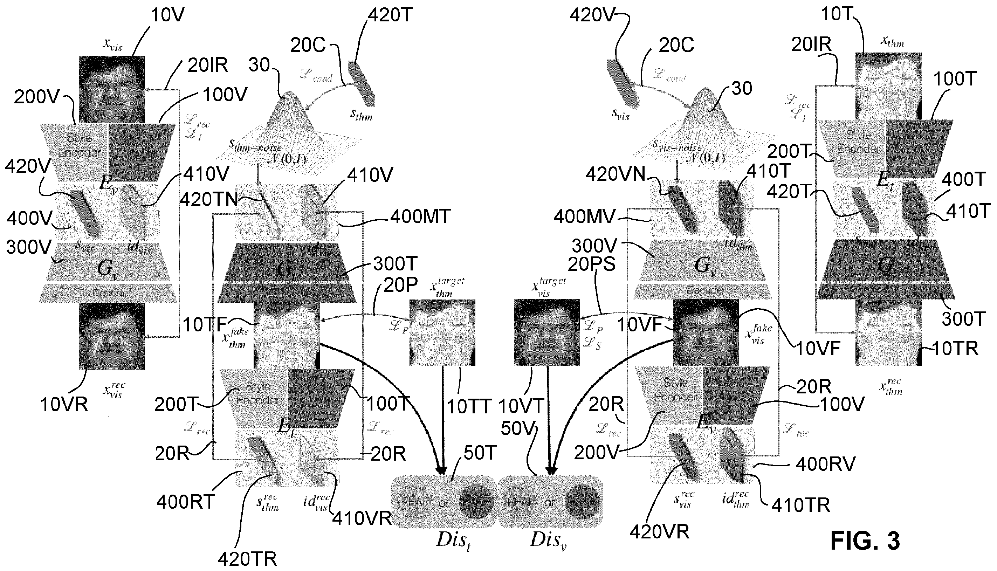

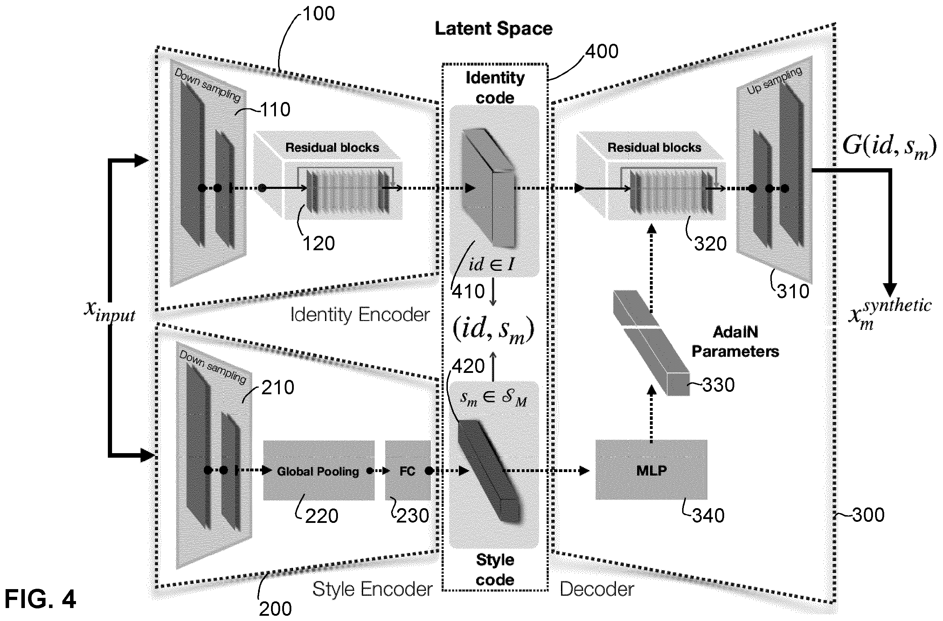

Fig. 3 shows a flowchart depicting the training of the method according to an embodiment of the invention. Fig. 4 illustrates the auto-encoder architecture used as an entity and in separated parts in the method as will be described in connection with Fig. 3.

On the left side, the handling of the visual image 10V of such a pair of visual/thermal training images is shown. The visual image 10V, also denoted $x_{vis}$, is style encoded in style encoder 200V and identity encoded in identity encoder 100V, which is also shown as $E_v$, generating the visual style code 420V and visual identity code 410V, respectively, which build the visual latent space 400V. These codes are then decoded in the visual decoder 300V, which is also shown as $G_v$, generating the recreated visual image 10VR, also shown as $x_{vis}^{rec}$. The learning instance is shown by the arrow connection between the two images 10V and 10VR, provided as a loss function 20IR, comprising in fact a loss function part $L_{rec}$ and a function part $L_I$. The loss functions parts are related to the identity and the recreation of the visual image.

On the right side of Fig. 3, the handling of the thermal image 10T of such a pair of visual/thermal training images is shown. The thermal image 10T, also denoted $x_{thm}$, is style encoded in style encoder 200T and identity encoded in identity encoder 100T, which is also shown as Et, generating the thermal code 420V and thermal code 410V, respectively, which build the thermal latent space 400T. These codes are then decoded in the thermal 300T, which is also shown as Gt, generating the recreated thermal image 10TR, also shown as $x_{thm}^{rec}$. The learning instance is shown by the arrow connection between the two images 10T and 10TR, provided as a loss function 20IR, comprising in fact a loss function part $L_{rec}$ and a function part $L_I$. The loss functions parts are related to the identity and the recreation of the thermal image.

Beside these learning steps, solely conducted in the separated thermal and visual image sets with the possible interaction of the loss function, especially in view of the main part of the supervised learning method, the entanglement of thermal and visual images and their reconstruction which is shown with the two middle parts of Fig. 3.

On the left side of the middle of Fig. 3, the generation of a simulated or fake thermal image 10TF is shown, also denoted as $x_{thm}^{fake}$. For this, the visual identity code 410V is combined in a mixed thermal image latent space 400MT with a specific style code, based on the addition of the thermal style code 420T with a noise 30, also denoted N(0,1), creating a thermal noisy style code 420TN. This combination is also learning via the loss function 20C, also $L_{cond}$. These two parts of the mixed thermal image latent space 400MT are fed to the thermal decoder 300T, also shown as Gt, creating said simulated thermal image 10TF. This image 10TF is then encoded with the thermal identity encoder 100T and the thermal style encoder 200T, also shown as Et, and thus creating separately a recreated thermal style code 420TR, also $s_{thm}^{rec}$, as well as a recreated visual identity code 410VR, $id_{vis}^{rec}$, forming the recreated thermal latent space 400RT. Both recreated codes 420TR and 410VR are connected with their above mentioned input counter parts 420TN and 410V, respectively, via a loss function 20R, also shown as $L_{rec}$.

This simulated thermal image 10TF is fed together with a target thermal image 10TT, $x_{thm}^{target}$ to a thermal discriminator 50T, also Dis$_t$, to recognize the simulated thermal image 10TF as real or fake, i.e. a binary decision. The target thermal image 10TT can be the original thermal image 10T. The learning process is improved through the target thermal image 10TT being connected with the simulated thermal image 10TF via the loss function 20P, also mentioned as $L_P$.

On the right side of the middle of Fig. 3, the generation of a simulated or fake visual image 10VF is shown, also denoted as $x_{vis}^{fake}$. For this, the thermal identity code 410T is combined in a mixed visual image latent space 400MV with a specific style code, based on the addition of the visual style code 420V with a noise 30, also denoted N(0,1), creating a visual noisy style code 420VN. It should be noted that the noise is added to the visual style code 420V is different to the noise added to the thermal style code. This combination is also learning via the loss function 20C, also $L_{cond}$. These two parts of the mixed visual image latent space 400MV are fed to the visual decoder 300V, also shown as $G_v$, creating said simulated visual image 10VF. This image 10VF is then encoded with the visual identity encoder 100V and the visual style encoder 200V, also shown as $E_v$, and thus creating separately a recreated visual style code 420VR, also $s_{vis}^{rec}$, as well as a recreated thermal identity code 410TR, $id_{thm}^{rec}$, forming the recreated visual latent space 400RV. Both recreated codes 420VR and 410TR are connected with their above mentioned input counter parts 420VN and 410T, respectively, via a loss function 20R, also shown as $L_{rec}$.

This simulated visual image 10VF is fed together with a target visual image 10VT, $x_{vis}^{target}$, to a visual discriminator 50V, also Dist, to recognize the simulated visual image 10VF as real or fake, i.e. a binary decision. The target visual image 10VT can be the original visual image 10V. The learning process is improved through the target visual image 10VT being connected with the simulated visual image 10VF via the loss function 20P, also mentioned as $L_P$.

Fig. 4 shows the auto-encoder architecture used as an entity and in separated parts in the method as described above in connection with Fig. 3. The generator comprises three networks for each domain, viz., Identity-Encoder, Style-Encoder and Decoder, targeted to extract a domain-shared identity latent code and a spectrum-specific style latent code. The translated image is reconstructed by combining the identity code with the style code of the target spectrum. Fig. 4 illustrates the auto-encoder architecture. In the discriminator, a multi-scale discriminator is adopted which enables generation of realistic images with refined details.

The input is mentioned as $x_{input}$, being an image handled separately in identity encoder 100 and style encoder 200. The identity encoder 100 uses a downsampler 110 to be applied as well as a residual block unit 120, generating the identity code 410 as part of the latent space 400. Identity code 410 is part of a set. On the other hand, the entry data is downsampled in 210 of the style encoder 200 and subsequently used as input for the global average pooling layer 220, followed by a last fully connected layer or FC 230 generating the style code 420 as part of the latent space 400.

On the other side, the decoder 300 uses the style code 420 in a MLP 340 which is followed by a AdaIN parameter storage 330. This result together with the identity code 410 is fed to the residual block unit 320 which generates after upscaling 310 the simulated or synthetic image, which is also mentioned as fake image.

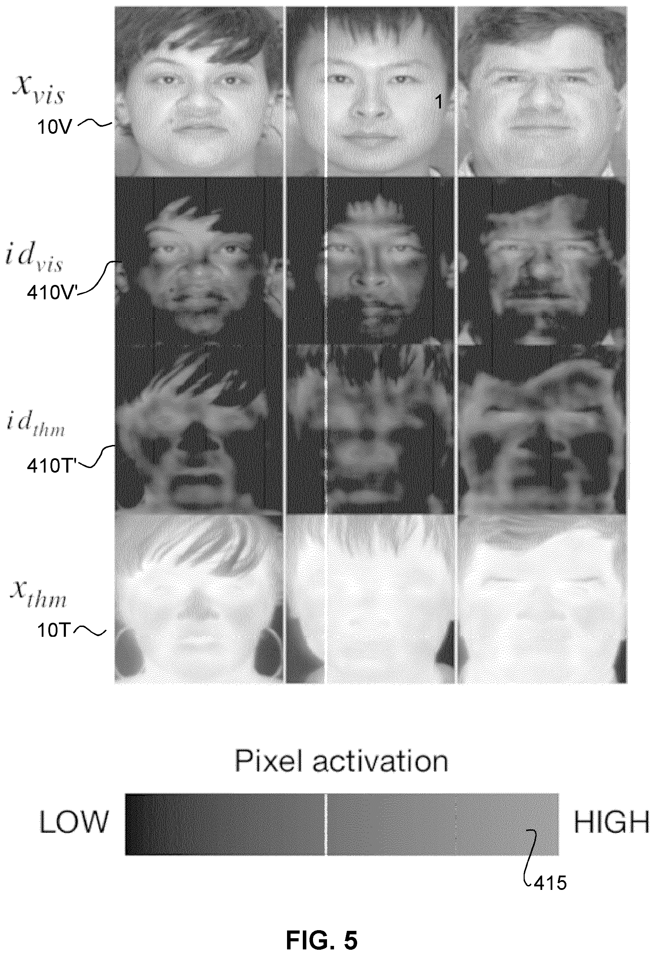

Fig. 5 shows three examples of visual and thermal images and the common identity features. The top row shows three visual images 10V, also denoted $x_{vis}$. The bottom row shows thermal images 10T of the same three persons, also denoted $x_{thm}$. In between, the upper row shows the visual identity code of the image 410V' or $id_{vis}$. The lower row shows the visual thermal code of the image 410T' or $id_{thm}$. The legend under the three images shows a pixel activation bar 415, where from the left to the right, the pixel activation is higher, i.e. the value and impact of the features is greater. It was acknowledged by the inventors and can be seen in Fig. 5, that identity features are preserved between the two cross-spectral images.

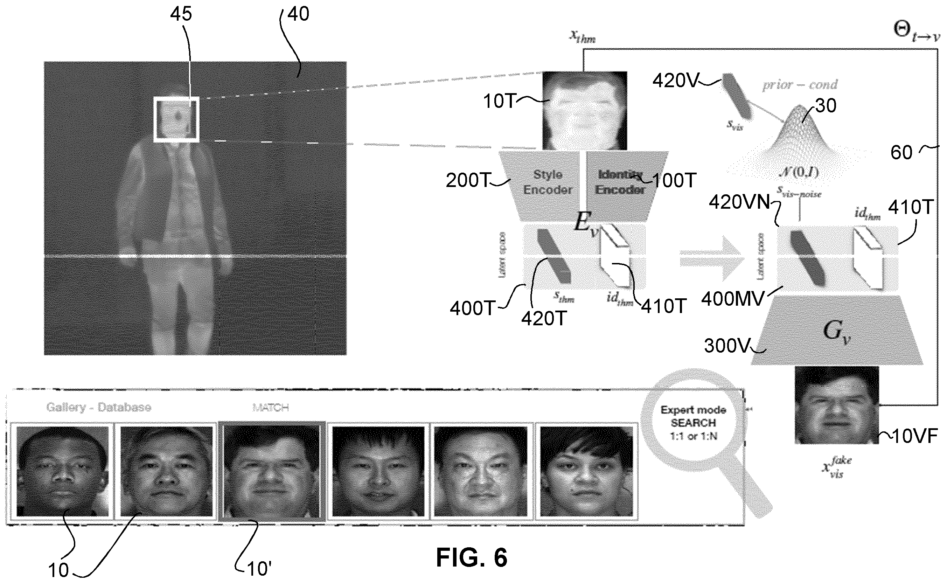

Fig. 6 shows the application of the method according to the invention in cross-spectral face recognition CFR. An image 40 is used as starting point. The image 40 comprises a person, wherein the frame 45 materalizes an extraction result, i.e. a cropped image of the thermal face of the person of interest which serves as thermal image 10T. The thermal image 10T is then encoded with style encoder 200T and identity encoder 100T generating the latent space 400T elements thermal style code 420T and thermal identity code 410T. Based on the knowledge of the visual style code 420V which is combined with noise 30, this visual noisy style code 420VN is used together with the thermal identity code 410T from the so created mixed latent space 400MV as entry values for the visual encoder 300V generating the simulated visual image 10VF. The created simulated visual image 10VF is then compared against a database of images 10, wherein image 10' is showing a visual image of the person of interest and provides a match.

The reference numerals are associated to scientific denominations. The following specification part is related to the development of the scientific denominations.

Let $V$ and $\mathcal{T}$ be the visible and thermal domains. Let $x_{vis} \in V$ and $x_{thm} \in \mathcal{T}$ be drawn from the marginal distributions $x_{vis} \sim p_V$ and $x_{thm} \sim p_{\mathcal{T}}$, respectively. Thermal-to-visible face recognition based on (Generative adversarial networks) GAN-synthesis aims to estimate the conditional distribution $p_{V|\mathcal{T}}(x_{vis}|x_{thm})$, where

$$p_{V|\mathcal{T}}\left(x_{vis}|x_{thm}\right) = \frac{p_{V,\mathcal{T}}\left(x_{vis},x_{thm}\right)}{p_{\mathcal{T}}\left(x_{thm}\right)} \qquad (1)$$

involves the joint distribution $p_{V,\mathcal{T}}(x_{vis}, x_{thm})$. As the joint distribution is not known, we adopt the assumption of "partially shared latent space" from the above mentioned MUNIT publication as follows.

A pair $(x_{vis}, x_{thm}) \sim p_{V,\mathcal{T}}$ of images, corresponding to the same face from the joint distribution, can be generated through the support of

(a) the identity latent code $id \in \mathcal{I}$, which is shared by both domains (which is introduced by the notation $id_{vis}, id_{thm} \in \mathcal{I}$ for better domain-identity formalization),

(b) the style latent code $s_m \in \mathcal{S}_{\mathcal{M}}$, where $(m, \mathcal{M}) \in \{(vis, V), (thm, \mathcal{T})\}$, which is specific to the individual domain.

Hence, the joint distribution is approximated via the latent space of the following two phases.

*Within-domain reconstruction phase*

Firstly, the identity latent code and style latent code are extracted from the input images $x_{vis}$ and $x_{thm}$

$$E_V(x_{vis}) = (id_{vis}, s_{vis}) \text{ and } E_{\mathcal{T}}(x_{thm}) = (id_{thm}, s_{thm}) \qquad (2).$$

Then, given the embedding of Equation (2), the face is reconstructed via the generator,

$$G_V(id_{vis}, s_{vis}) = x_{vis}^{rec} \text{ and } G_{\mathcal{T}}(id_{thm}, s_{thm}) = x_{thm}^{rec}, \qquad (3)$$

in order to learn the latent space for the specific face. Here, $\mathcal{M} \in \{V, \mathcal{T}\}$ represents the domain, $E_{\mathcal{M}}$ denotes the factorized identity code and style code auto-encoder, $G_{\mathcal{M}}$ is the underlying decoder, and $x_{vis}^{rec}$ and $x_{thm}^{rec}$ are the corresponding reconstructed images.

The objective of the present method is to learn the global image reconstruction mapping for a fixed $m \in \{vis, thm\}$, i.e.,

$$x_m \to x_m^{rec} \qquad (4)$$

while preserving facial identity features and allowing for a non-identity shift through latent reconstruction between

$$id_m \to id_m^{rec} \text{ and } s_m \to s_m^{rec} \qquad (5)$$

and forcing

$$s_{m-noise} \to s_m \qquad (6)$$

where, $(id_m^{rec}, s_m^{rec})$ are part of the extraction $(E_{\bar{\mathcal{M}}}(G_{\bar{\mathcal{M}}}(id_m, s_{\bar{m}-noise})), E_{\mathcal{M}}(G_{\mathcal{M}}(id_{\bar{m}}, s_{m-noise})))$, respectively, and $s_{m\text{-}noise}$ is randomly drawn from a prior normal distribution in order to learn the associated style distribution. $\bar{\mathcal{M}}$ and $\bar{m}$ represent opposite domains.

*Cross-domain translation phase*

In the domain translation phase, image-to-image translation is performed by swapping the encoder-modality (i.e., spectrum) with the opposite modality of the input image and imposing an explicit supervision on the style domain transfer functions $E_{\mathcal{V}}(x_{thm}) = (id_{thm}, s_{vis\text{-}noise})$ and $E_{\mathcal{T}}(x_{vis}) = (id_{vis}, s_{thm\text{-}noise})$, and then using $G_{\mathcal{V}}(id_{thm}, s_{vis\text{-}noise})$ and $G_{\mathcal{T}}(id_{vis}, s_{thm\text{-}noise})$ to produce the final output image in the target spectrum. This is formalized as follows.

$$\Theta_{t\to v} \; : \quad \mathcal{T} \quad \to \quad \mathcal{V}$$
$$x_{thm} \quad \mapsto \quad x_{vis}^{fake} = G_{\mathcal{V}}(E_{\mathcal{V}}(x_{thm})), \qquad (7)$$

$$\Theta_{v\to t} \; : \quad \mathcal{V} \quad \to \quad \mathcal{T}$$
$$x_{vis} \quad \mapsto \quad x_{thm}^{fake} = G_{\mathcal{T}}(E_{\mathcal{T}}(x_{vis})). \qquad (8)$$

Consequently, $\Theta_{t\to v}$ and $\Theta_{t\to v}$ are the functions that synthesize the corresponding visible ($t \to v$) and thermal ($v \to t$) faces. Finally, the present method learns the spectral conditional distribution $p_{\mathcal{V}|\mathcal{T}}(x_{vis}^{fake}|x_{thm})$ and $p_{\mathcal{T}|\mathcal{V}}(x_{thm}^{fake}|x_{vis})$ through a guided latent generation, where both these conditional distributions overcome the fact that we do not have access to the joint distribution $p_{\mathcal{V},\mathcal{T}}(x_{vis}, x_{thm})$. Indeed, the method is able to generate, as an alternative, the joint distributions $p_{\mathcal{V},\mathcal{T}}(x_{vis}^{rec}, x_{thm}^{fake})$ and $p_{\mathcal{V},\mathcal{T}}(x_{vis}^{fake}, x_{thm}^{rec})$ respectively. The translation is learned using neural networks, and the method as applied and shown in Fig. 6 is focused on Equation (7), where thermal face images are translated into realistic synthetic visible face images. However, the invention can be equally applied to the problem of translated visible face images into realistic synthetic thermal face images based on Equation (8).

The following paragraphs are related to the loss functions as explained in the framework of the invention.

He present method is trained with the help of objective functions that include adversarial and bi-directional reconstruction loss as well as conditional, perceptual, identity, and semantic loss. Bi-directional refers to the reconstruction learning process between *image → latent → image* and *latent → image → latent* by the sub-networks , depicted in Fig. 3.

The impact of each loss is investigated with respect to visual results and then propose an efficient combination. Further, an architecture as O.M. Parkhi, A- Vedaldi, and A.Zisserman have published as "Deep face recognition", 2015, which, when trained on a specific dataset, could be used to extract relevant features prior to applying the loss functions.

1) Adversarial Loss: Images generated during the translated phase through Equations (7) and (8) must be realistic and not distinguishable from real images in the target domain.

Therefore, the objective of the generators, $\Theta$, is to maximize the probability of the discriminator Dis making incorrect decisions. The objective of the discriminator Dis, on the other hand, is to maximize the probability of making a correct decision, i.e., to effectively distinguish between real and fake (synthesized) images.

$$\mathcal{L}_{GAN}^{t \to v} = \mathbb{E}_{x_{vis} \sim p_V}[log(\text{Dis}_V(x_{vis}))] + \mathbb{E}_{x_{thm} \sim p_T}[log(1 - \text{Dis}_V(\Theta_{t \to v}(x_{thm})))]$$

,

$$\mathcal{L}_{GAN}^{v \to t} = \mathbb{E}_{x_{thm} \sim p_T}[log(\text{Dis}_T(x_{thm}))] + \mathbb{E}_{x_{vis} \sim p_V}[log(1 - \text{Dis}_T(\Theta_{v \to t}(x_{vis})))]$$

.

The adversarial loss is denoted as follows.

$$\mathcal{L}_{GAN} = \mathcal{L}_{GAN}^{t \to v} + \mathcal{L}_{GAN}^{v \to t} \quad . \tag{9}$$

2) Bi-directional Reconstruction Loss: Loss functions in the Encoder-Decoder network encourage the domain reconstruction with regards to both the image reconstruction and latent space (identity+style) reconstruction.

$$\mathcal{L}_{rec}^{image} = \mathbb{E}_{x_m^{rec}; x_m \sim p_{\mathcal{M}}}[\|x_{vis}^{rec} - x_{vis}\|_1 + \|x_{thm}^{rec} - x_{thm}\|_1] \tag{10}$$

$$\mathcal{L}_{rec}^{identity} = \mathbb{E}_{id_m^{rec}; id_m \sim p_{\mathcal{M}}}[\|id_{vis}^{rec} - id_{vis}\|_1 + \|id_{thm}^{rec} - id_{thm}\|_1] \tag{11}$$

$$\mathcal{L}_{rec}^{style} = \mathbb{E}_{s_m^{rec}; s_m \sim \mathcal{N}}[\|s_{vis}^{rec} - s_{vis}\|_1 + \|s_{thm}^{rec} - s_{thm}\|_1] \tag{12}$$

The bi-directional reconstruction loss function is computed as follows:

$$\mathcal{L}_{rec} = \mathcal{L}_{rec}^{image} + \mathcal{L}_{rec}^{identity} + \mathcal{L}_{rec}^{style} \quad . \tag{13}$$

3) Conditional Loss: Imposing a condition on the spectral distribution provides an improvement and is a major difference from the baseline model. Indeed, this allows for a translation that is conditioned to the distribution of the target style code and, further, adds an explicit supervision on the final mapping $\Theta_{t \to v}$ and $\Theta_{v \to t}$. The conditional loss $\mathcal{L}_{cond}$ is defined as follows.

$$\mathcal{L}_{cond} = \mathbb{E}_{s_{vis-noise}; s_{vis} \sim \mathcal{N}}\|s_{vis-noise} - s_{vis}\|_1 + \mathbb{E}_{s_{thm-noise}; s_{thm} \sim \mathcal{N}}\|s_{thm-noise} - s_{thm}\|_1 \quad . \tag{14}$$

To improve the quality of the synthesized images and render them more realistic, three additional objective functions can be incorporated.

4) Perceptual Loss: The perceptual loss $\mathcal{L}_P$ affects the perceptive rendering of the image by measuring the high level semantic difference between synthesized and target face images. It reduces artefacts and enables the reproduction of realistic details. $\mathcal{L}_P$ is defined as follows:

$$\mathcal{L}_P = \mathop{\mathbb{E}}_{x_{vis}^{fake};x_{vis}\sim P_{\mathcal{V}}} \|\phi_P(x_{vis}^{fake}) - \phi_P(x_{vis})\|_1 + \mathop{\mathbb{E}}_{x_{thm}^{fake};x_{thm}\sim P_{\mathcal{T}}} \|\phi_P(x_{thm}^{fake}) - \phi_P(x_{thm})\|_1 \quad , \quad (15)$$

where, $\phi P$ represents features extracted by VGG-19, pretrained on ImageNet.

5) Identity Loss: The identity loss $\mathcal{L}_I$ is responsible for preserving identity-specific features during the image reconstruction phase and, therefore, encourages the translated image to preserve the identity content of the input image. $\mathcal{L}_I$ is defined as follows:

$$\mathcal{L}_I = \mathop{\mathbb{E}}_{x_{vis}^{rec};x_{vis}\sim P_{\mathcal{V}}} \|\phi_I(x_{vis}^{rec}) - \phi_I(x_{vis})\|_1 + \mathop{\mathbb{E}}_{x_{thm}^{rec};x_{thm}\sim P_{\mathcal{T}}} \|\phi_I(x_{thm}^{rec}) - \phi_I(x_{thm})\|_1 \quad , \quad (16)$$

where, $\phi_I$ denotes the features extracted from the VGG-19 network pre-trained on the large-scale VGGFace2 dataset.

6) Semantic Loss: The semantic loss $\mathcal{L}_S$ guides the texture synthesis from thermal to visible domain and imparts attention to specific facial details. A parsing network (see at https://github.com/zllrunning/face-parsing.PyTorch) is used to detect semantic labels and to classify them into 19 different classes which correspond to the segmentation mask of facial attributes provided by CelebAMask-HQ as introduced by C.-H. Lee, Z. Liu, L. Wu, and P. Luo. Maskgan in "Towards diverse and interactive facial image manipulation" in IEEE Conference on Computer Vision and Pattern Recognition, 2020, face parsing is applied to images in the datasets.. $\mathcal{L}_S$ is defined as follows.

$$\mathcal{L}_S = \mathop{\mathbb{E}}_{x_{vis}^{fake};x_{vis}\sim P_{\mathcal{V}}} \|\phi_S(x_{vis}^{fake}) - \phi_S(x_{vis})\|_1 \mathop{\mathbb{E}}_{x_{thm}^{fake};x_{thm}\sim P_{\mathcal{T}}} \|\phi_S(x_{thm}^{fake}) - \phi_S(x_{thm})\|_1, \quad (17)$$

where, $\phi_S$ is the parsing network, providing corresponding parsing class label.

Total loss: The overall loss function for the present method is denoted as follows:

$$\min_{E_{\mathcal{V}},E_{\mathcal{T}},G_{\mathcal{V}},G_{\mathcal{T}}} \max_{\mathbf{Dis}} \mathcal{L}(E_{\mathcal{V}},E_{\mathcal{T}},G_{\mathcal{V}},G_{\mathcal{T}},\mathbf{Dis}) =$$
$$\lambda_{GAN}\mathcal{L}_{GAN}+\lambda_{rec}\mathcal{L}_{rec}+\lambda_{cond}\mathcal{L}_{cond}+\lambda_P\mathcal{L}_P+\lambda_I\mathcal{L}_I+\lambda_S\mathcal{L}_S \quad (18)$$

An embodiment of the invention is based on the following implementation details. The framework of the method is implemented in Pytorch by adapting the mentioned MUNIT package (see: https://github.com/nvlabs/MUNIT) and designing the architecture for the modality-translation task. It is noted that the implementation omits their proposed domain-invariant perceptual loss as well as the style-augmented cycle consistency. The model is trained until convergence. The initial learning rate for Adam optimization is 0.0001 with $\beta_1 = 0:5$ and $\beta_2 = 0:999$. For all experiments of the exemplified embodiment, the batch size is set to 1 and, based on empirical analysis, the loss weights are set to $\lambda_{GAN} = 1$, $\lambda_{rec} = 10$, $\lambda_{cond} = 35$, $\lambda_P = 15$, $\lambda_I = 20$ and $\lambda_S = 10$.

The experimental results are as follows:

A) Dataset and Protocol

1) ARL-MMFD Dataset:

The ARL-MultiModal Face dataset as published by S. Hu, N. J. Short, B. S. Riggan, C. Gordon, K. P. Gurton, M. Thielke, P. Gurram, and A. L. Chan "A polarimetric thermal database for face recognition research" in IEEE Conference on Computer Vision and Pattern Recognition Workshops, 2016, in short (ARL-MMFD), contains visible, LWIR, and polarimetric face images of over 60 subjects and includes variations in both expression and standoff distances. The experiments only uses visible and LWIR (i.e., thermal) images at one particular stand-off distance: 2.5m. The first 30 subjects are used for testing and evaluation, and the remaining 30 subjects are used for training. The images in this dataset are already aligned and cropped.

2) ARL-VTF dataset: The ARL-Visible Thermal Face dataset as published by D. Poster, M. Thielke, R. Nguyen, S. Rajaraman, X. Di, C. N. Fondje, V. M. Patel, N. J. Short, B. S. Riggan, N. M. Nasrabadi, and S. Hu in "A large-scale, time-synchronized visible and thermal face dataset" in IEEE Winter Conference on Applications of Computer Vision, pages 1559-1568, 2021. (ARL-VTF) represents the largest collection of paired visible and thermal face images acquired in a time synchronized manner. It contains data from 395 subjects with over 500,000 images captured with variations in expression, pose, and eyewear. The established evaluation protocol is followed, which assigns 295 subjects for training and 100 subjects for testing and evaluation. The baseline gallery was selected and subjects without glasses, named G VB0-and P TB0-, respectively, was probed. Furthermore, the images based on the provided eyes, nose and mouth landmarks were aligned and processed.

B. Face recognition Performance

1) Face recognition Matcher: The ArcFace matcher published by J. Deng, J. Guo, N. Xue, and S. Zafeiriou in "Arcface: Additive angular margin loss for deep face recognition" in IEEE Conference on Computer Vision and Pattern Recognition, pages 4690-4699, 2019 was trained on normalized face images of size 112_112 from the MS-Celeb-1M dataset published by Y. Guo, L. Zhang, Y. Hu, X. He, and J. Gao in "Ms-celeb-1m: A dataset and benchmark for large-scale face recognition" in European Conference on Computer Vision, 2016 with additive angular margin loss. ResNet-50 was used as the embedding network and the final embedded feature size was set to 512. $I_2$ normalization was applied to the extracted feature vectors (embeddings), prior to the computation of cosine distance (match) scores.

2) Evaluation on Datasets: The method according to the invention aims to decompose the latent space. However, MUNIT, that serves as the basis for the method, performs image translation in an unsupervised manner and cannot be employed in the present thermal-to-visible scenario, as facial identity would not be preserved. Therefore, a loss function $\mathcal{L}_{cond}$, especially shown as in Equation (14) is incorporated as a conditional constraint forcing latent reconstruction (Equation (6)) with a normal noise distribution. Thus, the MUNIT-like supervised-approach, denoted as $\mathcal{L}_{base}$, will serve as a reference baseline model in the study.

Face verification experiments are conducted on the above mentioned ARLMMFD and ARL-VTF datasets. Area Under the Curve (AUC) and Equal Error Rate (EER) metrics are computed using the ArcFace matcher. Table I reports face verification results on the ARL-MMFD and ARL-VTF datasets. A higher AUC indicates better performance, whereas a lower EER is better. It is observed that translating thermal face images into visible-like face images significantly boosts the verification performance. For example, the direct comparison approach, in which a thermal probe is directly compared to the visible gallery, is related to the lowest AUC and highest EER scores, viz., 73:71%AUC and 32:73%EER in ARL-MMFD, and 54:80%AUC and 46:36%EER in ARL-VTF. When the $\mathcal{L}_{base}$ is applied from the baseline approach, and the

adversarial $\mathcal{L}_{GAN}$ (Equation (9)), bi-directional reconstruction $\mathcal{L}_{rec}$ (Equation (13)) and conditional $\mathcal{L}_{cond}$ (Equation (14)) loss functions are incorporated, the performance improves to 79:33%AUC and 29:16%EER on ARL-MMFD, and 92:21%AUC and 15:88%EER on ARL-VTF. This confirms that image-to-image translation significantly reduces the modality gap. The proposed method when in includes $\mathcal{L}_{P+I+S}$ (Equation (18)), built on the basis of $\mathcal{L}_{base}$, that is improved by adding the perceptual $\mathcal{L}_P$ (Equation (15)), identity $\mathcal{L}_I$ (Equation (16)) and semantic $\mathcal{L}_S$ (Equation (17)) loss functions, exhibits the best performance of 93:99%AUC and 13:02%EER on ARL-MMFD, and 94:26%AUC and 12:99%EER on ARLVTF.

In optimizing LG-GAN on the large-scale dataset ARL-VTF, the hyper-parameters (weights) are tuned, thereby enabling objective functions to be combined in an effective manner. $\lambda_{rec}$ = 20 is set, placing emphasis on both image reconstruction $\mathcal{L}_{rec}^{image}$ (Equation (10)) and identity code reconstruction $\mathcal{L}_{rec}^{identity}$ (Equation (11)). On the other hand, $\lambda_I$ = 10 is increased towards improving the face verification accuracy to 96:96%AUC and 5:94%EER.

Table 1

| | ARL-MMFD Dataset [8] | | | ARL-VTF Dataset [15] | | |
|---|---|---|---|---|---|---|
| | AUC (%) | EER (%) | SSIM | AUC (%) | EER (%) | SSIM |
| *Direct comparison* | 73.71 | 32.73 | 0.2899 | 54.80 | 46.31 | 0.3739 |
| $\mathcal{L}_{base}$ | 79.33 | 29.16 | 0.4409 | 92.21 | 15.88 | 0.6049 |
| $\mathcal{L}_P$ | 86.99 | 21.09 | 0.4596 | 92.79 | 14.24 | 0.6129 |
| $\mathcal{L}_I$ | 84.20 | 22.90 | 0.4549 | 92.98 | 13.01 | 0.6101 |
| $\mathcal{L}_{P+I}$ | 87.63 | 19.40 | 0.4626 | 92.15 | 15.36 | 0.6136 |
| $\mathcal{L}_{P+I+S}$ = LG-GAN | **93.99** | **13.02** | **0.4652** | 94.26 | 12.99 | 0.6145 |
| *LG-GAN* optimized | | | | **96.96** | **5.94** | **0.6787** |

C. Ablation study

To illustrate the impact of loss functions included in the present method on visual quality, an ablation study is conducted using both ARL-MMFD and ARL-VTF datasets. The quality of generated images is evaluated by the structural similarity index measure (SSIM) introduced by Z. Wang, A. C. Bovik, H. R. Sheikh, and E. P. Simoncelli in "Image quality assessment: from error visibility to structural similarity" in IEEE Transactions on Image Processing, pages 600-612, 2004, where an SSIM score of 1 is the extreme case of comparing identical images. Table I reports average SSIM scores computed on both datasets under different experimental configurations.

The first intuitive observation has to do with the low performance of direct matching between thermal and visible face images that can be explained in terms of the lower SSIM of 0:2899 and 0:3739, respectively, on the ARLMMFD and ARL-VTF datasets. This illustrates once more the modality gap. In an attempt to overcome this modality gap, the first baseline experiment $\mathcal{L}_{base}$, without visual quality optimization, boosts the SSIM score to 0:4409 and 0:6049, respectively. However, it is noted that generated results are rather blurry. By adding additional loss functions to $\mathcal{L}_{base}$, $\mathcal{L}_P$ (Equation (15)) and $\mathcal{L}_I$ (Equation (16)), namely the perceptual and identity losses, the SSIM score only marginally increases. Jointly, $\mathcal{L}_{P+I}$ improves the SSIM score further. Finally, the method including all loss functions, mentioned as LG-GAN is able to generate more realistic images with less artefacts, and with higher similarity to the visible ground-truth images. The resulting SSIM scores are 0:4652 and 0:6145, respectively. When LG-GAN is optimized on the large scale VTF dataset, a SSIM score of 0.6787 is observed.

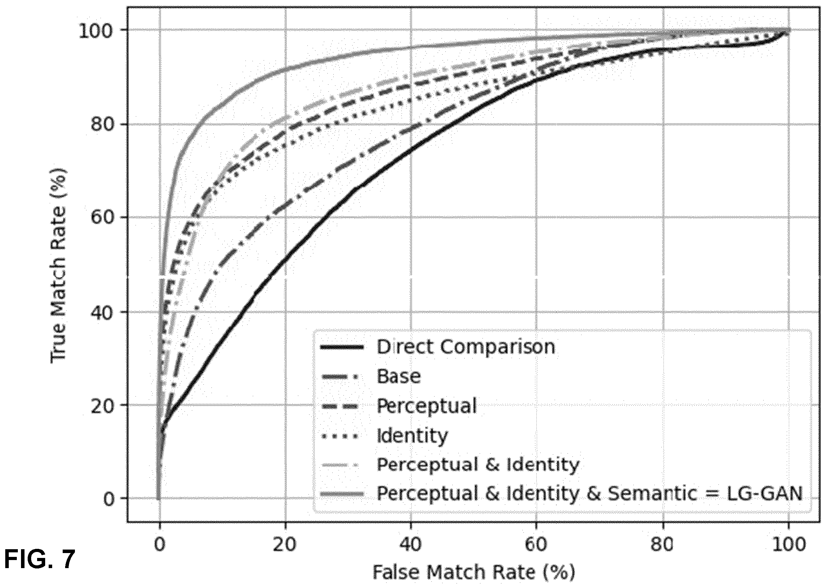

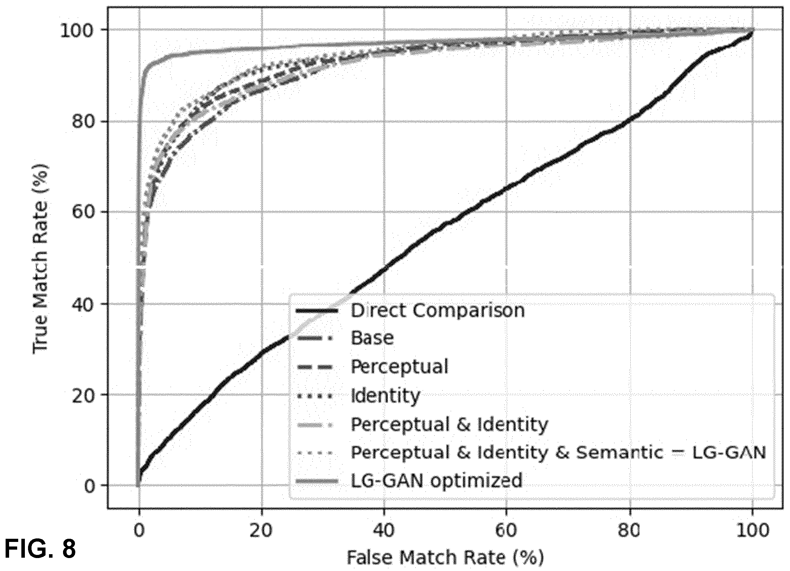

Besides the impact of individual and combined loss functions on the visual quality of images, their related impact on the face verification performance is shown with. Fig. 7 and Fig. 8 depict ROC curves pertaining to different loss functions for the ARL-MMFD and ARL-VTF datasets, respectively. These clearly show a correlation between SSIM scores and CFR matching performance.

D. Latent code visualization

Understanding the latent code is critical for the present method, as it aims to elicit identity-specific information while ignoring spectrum induced information. A disentangled latent space is produced using an identity encoder and a style encoder that decomposes the input image into an identity code and a style code. As discussed earlier, the style code represents the spectral information and drives the domain translation, without adversely affecting the identity information. However, here is explored whether identity is explicitly encoded in the latent space. Towards this goal, the identity code, $id_m$, is directly visualized after the encoding step $E_\mathcal{M}(x_m)$. This is realized for the visual image 10V as well as for the thermal image 10T. Then, by up-scaling the code to the target image size, the pertinent pixels are determined that are responsible for the identity information in the latent space, once for the visual identity code 410V' and once for the thermal identity code 410T'. This is visualized in Fig. 5. It is observed that facial features around eyes, nose, mouth and hair have been encoded, shown as lighter. Parts of the image

Moreover, identity codes - $id_{vis}$ and $id_{thm}$ - extracted from both spectra also highlight the same visual information.

The method comprises a latent-guided generative adversarial network (LG-GAN) that explicitly decomposes an input image into an identity code and a style code. The identity code is learned to encode spectral-invariant identity features between thermal and visible image domains in a supervised setting. In addition, the identity code offers useful insights in explaining salient facial structures that are essential to the synthesis of high-fidelity visible spectrum face images. Experiments on two datasets suggest that the present method achieves competitive thermal-to-visible cross-spectral face recognition accuracy, while enabling explanations on salient features used for thermal-to-visible image translation.

## LIST OF REFERENCE SIGNS

| | | | |
|---|---|---|---|
| 10 | gallery images | 230 | FC |
| 10' | image identified | 300 | decoder |
| 10T | thermal image | 300T | decoder thm |
| 10TF | thermal image fake | 300V | decoder vis |
| 10TR | thermal image recreated | 310 | up sampling |
| 10TT | thermal image target | 320 | residual blocks |
| 10V | visual image | 330 | AdaIN parameters |
| 10VF | visual image fake | 340 | MLP |
| 10VR | visual image recreated | 400 | latent space |
| 10VT | visual image target | 400MT | latent space mixed thm |
| 20C | loss function | 400MV | latent space mixed vis |
| 20IR | loss function | 400RT | latent space recreated thm |
| 20P | loss function | 400RV | latent space recreated vis |
| 20PS | loss function | 400T | latent space thm |
| 20R | loss function | 400V | latent space vis |
| 30 | noise | 410 | identity code |
| 40 | starting image | 410T | identity code thm |
| 45 | cropped image | 410T' | identity thm features |
| 50V | discriminator vis | 410TR | identity code thm recreated |
| 50T | discriminator thm | 410V | identity code vis |
| 60 | transfer function | 410V' | identity vis features |
| 100 | identity encoder | 410VR | identity code vis recreated |
| 100T | identity encoder thm | 410VT | common identity code |
| 100V | identity encoder vis | 415 | high pixel relevance |
| 110 | down sampling | 420 | style code |
| 120 | residual blocks | 420T | style code thm |
| 200 | style encoder | 420TN | style code thm noise |
| 200T | style encoder thm | 420TR | style code thm recreated |

(continued)

| 200V | style encoder vis | 420V | style code vis |
| 210 | down sampling | 420VN | style code vis noise |
| 220 | global pooling | 420VR | style code vis recreated |

**Claims**

1. A cross-spectral face recognition training method using a visible light face image set comprising a number of visual images and an infrared face image set comprising a number of thermal images, both sets related to the identical group of persons, wherein each thermal image has a corresponding visual image of an identical person, **characterized in that** it includes:

   a spectrally separated learning submethod trained in a supervised manner and comprising the steps of:
   decomposing each visual or thermal image of the visual or thermal image set into a visual or thermal identity code using a visual or thermal identity encoder respectively and into a visual or thermal style code using a visual or thermal style encoder, respectively,
   decoding the visual identity code together with the visual style code generating a recreated visual image, and decoding the thermal identity code together with the thermal style code generating a recreated thermal image, wherein an identity loss function as well as a recreated image loss function is connecting the recreated visual image and the recreated thermal image with the associated visible light face image and associated thermal image,
   a first cross-spectral learning submethod for each of the visual target images comprising the steps of:

      providing a noise source and combining it with the visual style code creating a noise modified visual style code based on a loss function providing a condition on the spectral distribution,
      using this noise modified visual style code together with the thermal identity code as input for the visual decoder to create a simulated visual image,
      coding a recreated visual style code and a recreated thermal identity code by coding the simulated visual image with the visual style encoder and the visual identity encoder, respectively,
      wherein the recreated image loss function is applied on the recreated visual style code feeding back onto the noise modified visual style code as well as on the recreated thermal identity code feeding back on the thermal identity code,
      wherein the simulated visual image is compared with a target visual image in a visual discriminator for match or non-match,
      a second cross-spectral learning submethod for each of the thermal target images trained in a supervised manner simultaneously to the spectrally separated learning submethods and comprising the steps of:

         providing a noise source and combining it with the thermal style code creating a noise modified thermal style code based on a loss function providing a condition on the spectral distribution,
         using this noise modified thermal code together with the visual identity code as input for the thermal decoder to create a simulated thermal image,
         coding a recreated thermal style code and a recreated visual identity code by coding the simulated thermal image with the thermal style encoder and the thermal identity encoder, respectively,
         wherein the recreated image loss function is applied on the recreated thermal style code feeding back onto the noise modified thermal style code as well as on the recreated visual identity code feeding back on the thermal identity code,
         wherein the simulated thermal image is compared with a target thermal image in a thermal discriminator for match or non-match.

2. A cross-spectral face recognition method, comprising the training method of claim 1 and further comprising an image set of visual images and a thermal image of the face of a person of interest, wherein the thermal image is encoded with a style encoder and identity encoder generating the latent space elements of the thermal style code and thermal identity code, wherein based on the visual style code combined with noise, the visual noisy style code is used together with the thermal identity code as entry values for the visual encoder generating a simulated visual image, which simulated visual image is then compared against the set of visual images to identify the presence of a visual image of the person of interest and providing a match.

3. A cross-spectral face recognition method, comprising the training method of claim 1 and further comprising an image set of thermal images and a visual image of the face of a person of interest, wherein the visual image is encoded with a style encoder and identity encoder generating the latent space elements of the visual style code and visual identity code, wherein based on the thermal style code combined with noise, the thermal noisy style code is used together with the visual identity code as entry values for the thermal encoder generating a simulated thermal image, which simulated thermal image is then compared against the set of thermal images to identify the presence of a thermal image of the person of interest and providing a match.

**Patentansprüche**

1. Spektralübergreifendes Gesichtserkennungstrainingsverfahren unter Verwendung eines Sichtlicht-Gesichtsbildsatzes, der eine Anzahl von visuellen Bildern umfasst, und eines Infrarot-Gesichtsbildsatzes, der eine Anzahl von Wärmebildern umfasst, wobei beide Sätze sich auf die identische Gruppe von Personen beziehen, wobei jedes Wärmebild ein entsprechendes visuelles Bild einer identischen Person aufweist, **dadurch gekennzeichnet, dass** es einschließt:
ein spektral getrenntes Lernunterverfahren, das in überwachter Weise trainiert ist und umfassend die Schritte:

Zerlegen jedes visuellen oder thermischen Bildes des visuellen oder thermischen Bildsatzes in einen visuellen oder thermischen Identitätscode unter Verwendung eines visuellen oder thermischen Identitätscodierers bzw. in einen visuellen oder thermischen Stilcode unter Verwendung eines visuellen oder thermischen Stilcodierers, Decodieren des visuellen Identitätscodes zusammen mit dem visuellen Stilcode zur Erzeugung eines rekonstruierten visuellen Bildes und Decodieren des thermischen Identitätscodes zusammen mit dem thermischen Stilcode zur Erzeugung eines rekonstruierten Wärmebildes,
wobei eine Identitätsverlustfunktion sowie eine rekonstruierte Bildverlustfunktion das rekonstruierte visuelle Bild und das rekonstruierte Wärmebild mit dem zugehörigen Sichtlicht-Gesichtsbild und dem zugehörigen Wärmebild verbindet,
ein erstes spektralübergreifendes Lernunterverfahren für jedes der visuellen Zielbilder, umfassend die Schritte:

Bereitstellen einer Rauschquelle und Kombinieren derselben mit dem visuellen Stilcode, wodurch ein rauschmodifizierter visueller Stilcode basierend auf einer Verlustfunktion erstellt wird, die eine Bedingung für die spektrale Verteilung bereitstellt,
unter Verwendung dieses rauschmodifizierten visuellen Stilcodes zusammen mit dem thermischen Identitätscode als Eingabe für den visuellen Decodierer zur Erzeugung eines simulierten visuellen Bildes,
Codieren eines rekonstruierten visuellen Stilcodes und eines rekonstruierten thermischen Identitätscodes durch Codieren des simulierten visuellen Bildes mit dem visuellen Stilcodierer bzw. dem visuellen Identitätscodierer,
wobei die Verlustfunktion des rekonstruierten Bildes auf den rekonstruierten visuellen Stilcode angewendet wird, der auf den rauschmodifizierten visuellen Stilcode zurückwirkt, sowie auf den rekonstruierten thermischen Identitätscode, der auf den thermischen Identitätscode zurückwirkt,
wobei das simulierte visuelle Bild mit einem visuellen Zielbild in einem visuellen Diskriminator auf Übereinstimmung oder Nichtübereinstimmung verglichen wird,
ein zweites spektralübergreifendes Lernunterverfahren für jedes der thermischen Zielbilder, das in überwachter Weise gleichzeitig zu den spektral getrennten Lernunterverfahren trainiert wird und umfassend die Schritte:

Bereitstellen einer Rauschquelle und Kombinieren derselben mit dem thermischen Stilcode, wodurch ein rauschmodifizierter thermischer Stilcode basierend auf einer Verlustfunktion erstellt wird, die eine Bedingung für die spektrale Verteilung bereitstellt,
unter Verwendung dieses rauschmodifizierten thermischen Codes zusammen mit dem visuellen Identitätscode als Eingabe für den thermischen Decodierer zur Erzeugung eines simulierten Wärmebildes,
Codieren eines rekonstruierten thermischen Stilcodes und eines rekonstruierten visuellen Identitätscodes durch Codieren des simulierten Wärmebildes mit dem thermischen Stilcodierer bzw. dem thermischen Identitätscodierer,
wobei die Verlustfunktion des rekonstruierten Bildes auf den rekonstruierten thermischen Stilcode angewendet wird, der auf den rauschmodifizierten thermischen Stilcode zurückwirkt, sowie auf den rekonstruierten visuellen Identitätscode, der auf den thermischen Identitätscode zurückwirkt,

wobei das simulierte Wärmebild mit einem Zielwärmebild in einem thermischen Diskriminator auf Übereinstimmung oder Nichtübereinstimmung verglichen wird.

2. Spektralübergreifendes Gesichtserkennungsverfahren, umfassend das Trainingsverfahren nach Anspruch 1 und ferner umfassend einen Bildsatz von visuellen Bildern und ein Wärmebild des Gesichts einer Person von Interesse, wobei das Wärmebild mit einem Stilcodierer und Identitätscodierer codiert wird, die die latenten Raumelemente des thermischen Stilcodes und thermischen Identitätscodes erzeugen, wobei basierend auf dem visuellen Stilcode kombiniert mit Rauschen, der visuelle verrauschte Stilcode zusammen mit dem thermischen Identitätscode als Eingangswerte für den visuellen Encoder verwendet wird, der ein simuliertes visuelles Bild erzeugt, welches simulierte visuelle Bild dann gegen den Satz von visuellen Bildern verglichen wird, um die Anwesenheit eines visuellen Bildes der Person von Interesse zu identifizieren und eine Übereinstimmung bereitzustellen.

3. Spektralübergreifendes Gesichtserkennungsverfahren, umfassend das Trainingsverfahren nach Anspruch 1 und ferner umfassend einen Bildsatz von Wärmebildern und ein visuelles Bild des Gesichts einer Person von Interesse, wobei das visuelle Bild mit einem Stilcodierer und Identitätscodierer codiert wird, die die latenten Raumelemente des visuellen Stilcodes und visuellen Identitätscodes erzeugen, wobei basierend auf dem thermischen Stilcode kombiniert mit Rauschen, der thermische verrauschte Stilcode zusammen mit dem visuellen Identitätscode als Eingangswerte für den thermischen Codierer verwendet wird, der ein simuliertes Wärmebild erzeugt, welches simulierte Wärmebild dann gegen den Satz von Wärmebildern verglichen wird, um die Anwesenheit eines Wärmebildes der Person von Interesse zu identifizieren und eine Übereinstimmung bereitzustellen.

**Revendications**

1. Procédé d'entraînement de reconnaissance de visage inter-spectral à l'aide d'un ensemble d'images de visage en lumière visible comprenant un certain nombre d'images visuelles et d'un ensemble d'images de visage en infrarouge comprenant un certain nombre d'images thermiques, l'un et l'autre des ensembles se rapportant au groupe identique de personnes, dans lequel chaque image thermique a une image visuelle correspondante d'une personne identique, **caractérisé en ce qu'il** comporte :

un sous-procédé d'apprentissage spectralement séparé entraîné d'une manière supervisée et comprenant les étapes consistant à :

décomposer chaque image visuelle ou thermique de l'ensemble d'images visuelles ou thermiques en un code d'identité visuelle ou thermique à l'aide d'un encodeur d'identité visuelle ou thermique respectivement et en un code de style visuel ou thermique à l'aide d'un encodeur de style visuel ou thermique, respectivement,
décoder le code d'identité visuelle conjointement avec le code de style visuel en générant une image visuelle recréée, et décoder le code d'identité thermique conjointement avec le code de style thermique en générant une image thermique recréée,
dans lequel une fonction de perte d'identité ainsi qu'une fonction de perte d'image recréée relie l'image visuelle recréée et l'image thermique recréée avec l'image de visage en lumière visible associée et l'image thermique associée,
un premier sous-procédé d'apprentissage inter-spectral pour chacune des images cible visuelles comprenant les étapes consistant à :

fournir une source de bruit et la combiner avec le code de style visuel ce qui crée un code de style visuel modifié par du bruit en fonction d'une fonction de perte fournissant une condition sur la distribution spectrale,
utiliser ce code de style visuel modifié par du bruit conjointement avec le code d'identité thermique en guise d'entrée permettant au décodeur visuel de créer une image visuelle simulée,
coder un code de style visuel recréé et un code d'identité thermique recréé en codant l'image visuelle simulée avec l'encodeur de style visuel et l'encodeur d'identité visuelle, respectivement,
dans lequel la fonction de perte d'image recréée est appliquée sur le code de style visuel recréé ce qui agit rétroactivement sur le code de style visuel modifié par du bruit ainsi que sur le code d'identité thermique recréé ce qui agit rétroactivement sur le code d'identité thermique,
dans lequel l'image visuelle simulée est comparée à une image visuelle cible dans un discriminateur visuel pour concordance ou non-concordance,
un second sous-procédé d'apprentissage inter-spectral pour chacune des images cibles thermiques entraînées d'une manière supervisée simultanément aux sous-procédés d'apprentissage spectralement séparés et comprenant les étapes consistant à :

fournir une source de bruit et la combiner avec le code de style thermique ce qui crée un code de style visuel modifié par du bruit en fonction d'une fonction de perte fournissant une condition sur la distribution spectrale,

utiliser ce code thermique modifié par du bruit conjointement avec le code d'identité visuelle en guise d'entrée permettant au décodeur thermique de créer une image thermique simulée,

coder un code de style thermique recréé et un code d'identité visuelle recréé en codant l'image thermique simulée avec l'encodeur de style thermique et l'encodeur d'identité thermique, respectivement,

dans lequel la fonction de perte d'image recréée est appliquée sur le code de style thermique recréé ce qui agit rétroactivement sur le code de style thermique modifié par du bruit ainsi que sur le code d'identité visuelle recréé ce qui agit rétroactivement sur le code d'identité thermique,

dans lequel l'image thermique simulée est comparée à une image thermique cible dans un discriminateur thermique pour concordance ou non-concordance.

2. Procédé de reconnaissance de visage inter-spectral, comprenant le procédé d'entraînement selon la revendication 1 et comprenant en outre un ensemble d'images, d'images visuelles et une image thermique du visage d'une personne d'intérêt, dans lequel l'image thermique est encodée avec un encodeur de style et un encodeur d'identité générant les éléments d'espace latents du code de style thermique et du code d'identité thermique, dans lequel en fonction du code de style visuel combiné avec du bruit, le code de style visuel bruité est utilisé conjointement avec le code d'identité thermique en guise de valeurs d'entrée pour l'encodeur visuel générant une image visuelle simulée, cette image visuelle simulée est ensuite comparée vis-à-vis de l'ensemble d'images visuelles pour identifier la présence d'une image visuelle de la personne d'intérêt et la fourniture d'une concordance.

3. Procédé de reconnaissance de visage inter-spectral, comprenant le procédé d'entraînement selon la revendication 1 et comprenant en outre un ensemble d'images, d'images thermiques et une image visuelle du visage d'une personne d'intérêt, dans lequel l'image visuelle est encodée avec un encodeur de style et un encodeur d'identité générant les éléments d'espace latents du code de style visuel et du code d'identité visuelle, dans lequel en fonction du code de style thermique combiné avec du bruit, le code de style thermique bruité est utilisé conjointement avec le code d'identité visuelle en guise de valeurs d'entrée pour l'encodeur thermique générant une image thermique simulée, cette image thermique simulée est ensuite comparée vis-à-vis de l'ensemble d'images thermiques pour identifier la présence d'une image thermique de la personne d'intérêt et la fourniture d'une concordance.

**FIG. 1**

FIG. 2

FIG. 3

FIG. 4

EP 4 449 382 B1

Pixel activation

LOW  HIGH

415

**FIG. 5**

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHANG et al.** Tv-gan: Generative adversarial network based thermal to visible face recognition. *International Conference on Biometrics*, 2018, 174-181
- Exemplar Guided Cross-Spectral Face Hallucination via Mutual Information Disentanglement. **WU et al.** 2020 25th International Conference on Pattern Recognition (ICPR). IEEE, 10 January 2021, 4206-4212
- **CHEN et al.** Matching thermal to visible face images using a semantic-guided generative adversarial network. *IEEE International Conference on Automatic Face & Gesture Recognition*, 2019, 1-8
- **DI et al.** Multi-scale thermal to visible face verification via attribute guided synthesis. *IEEE Transactions on Biometrics, Behavior, and Identity Science*, 2021, vol. 3 (2), 266-280
- **WANG et al.** Thermal to visible facial image translation using generative adversarial networks. *IEEE Signal Processing Letters*, 2018, vol. 25 (8), 1161-1165
- **IRANMANESH et al.** Coupled generative adversarial network for heterogeneous face recognition. *Image and Vision Computing*, 2020, vol. 94, 103861
- **KEZEBOU et al.** TR-GAN:thermal to RGB face synthesis with generative adversarial network for crossmodal face recognition. *Mobile Multimedia/-Image Processing, Security, and Applications*, 2020, vol. 11399, 158-168
- **DI et al.** Polarimetric thermal to visible face verification via self-attention guided synthesis. *International Conference on Biometrics*, 2019, 1-8

- **X. HUANG et al.** Multimodal unsupervised image-to-image translation. *European Conference on Computer Vision*, 2018
- **O.M. PARKHI** ; **A- VEDALDI** ; **A.ZISSERMAN**. *Deep face recognition*, 2015
- **C.-H. LEE** ; **Z. LIU** ; **L. WU** ; **P. LUO. MASKGAN**. Towards diverse and interactive facial image manipulation. *IEEE Conference on Computer Vision and Pattern Recognition*, 2020
- **S. HU** ; **N. J. SHORT** ; **B. S. RIGGAN** ; **C. GORDON** ; **K. P. GURTON** ; **M. THIELKE** ; **P. GURRAM** ; **A. L. CHAN**. A polarimetric thermal database for face recognition research. *IEEE Conference on Computer Vision and Pattern Recognition Workshops*, 2016
- **D. POSTER** ; **M. THIELKE** ; **R. NGUYEN** ; **S. RAJARAMAN** ; **X. DI** ; **C. N. FONDJE** ; **V. M. PATEL** ; **N. J. SHORT** ; **B. S. RIGGAN** ; **N. M. NASRABADI**. A large-scale, time-synchronized visible and thermal face dataset. *IEEE Winter Conference on Applications of Computer Vision*, 2021, 1559-1568
- **J. DENG** ; **J. GUO** ; **N. XUE** ; **S. ZAFEIRIOU**. Arcface: Additive angular margin loss for deep face recognition. *IEEE Conference on Computer Vision and Pattern Recognition*, 2019, 4690-4699
- **Y. GUO** ; **L. ZHANG** ; **Y. HU** ; **X. HE** ; **J. GAO**. Ms-celeb-1m: A dataset and benchmark for large-scale face recognition. *European Conference on Computer Vision*, 2016
- **Z. WANG** ; **A. C. BOVIK** ; **H. R. SHEIKH** ; **E. P. SIMONCELLI**. Image quality assessment: from error visibility to structural similarity. *IEEE Transactions on Image Processing*, 2004, 600-612